Europäisches Patentamt

European Patent Office

Office européen des brevets

(19)

(11) Publication number: **0 307 188**
A2

# EUROPEAN PATENT APPLICATION

(12)

(21) Application number: **88308277.8**

(22) Date of filing: **07.09.88**

(51) Int. Cl.⁴: **G 01 G 13/16**
**G 01 G 19/32**

(30) Priority: **07.09.87 JP 135498/87**

(43) Date of publication of application:
**15.03.89 Bulletin 89/11**

(84) Designated Contracting States: **DE FR GB IT**

(71) Applicant: **ISHIDA SCALES MFG. CO. LTD.**
**44, Shogoin Sannou-cho Sakyo-ku**
**Kyoto-shi Kyoto (JP)**

(72) Inventor: **Fujiwara, Atsushi**
**27-1, Saiin Nishisanzo-cho Ukyo-ku**
**Kyoto-shi Kyoto (JP)**

(74) Representative: **Fane, Christopher Robin King et al**
**HASELTINE LAKE & CO. Hazlitt House 28 Southampton**
**Buildings Chancery Lane**
**London, WC2A 1AT (GB)**

(54) Collecting weighed articles.

(57) An upper collection chute (11') is composed of a plurality of laterally joined unit chutes (15) each associated with a stopper (17) for temporarily retaining articles dropping on and along the unit chutes (15) thereby to brake the articles. A lower collection chute (12') is disposed at the lower end of the upper collection chute (11'), and associated with a stopper (21) for temporarily retaining articles dropping on and along the inner surface of the lower collection chute (12') thereby to brake the articles. Vibrators (27) are attached to the outer surface of the upper collection chute (11'). Weighing hoppers (18) are disposed above the upper ends, respectively, of the unit chutes (15) of the upper collection chute (11').

Fig. 1

**Description**

# COLLECTING WEIGHED ARTICLES

The present invention relates to collecting weighed articles.

As well known in the art, many various types of merchandise are handled in distribution facilities such as supermarkets and the like. In such distribution facilities and also upon transfer of goods between retail stores and consumers, articles of merchandise are weighed and packaged for smooth handling and commercial transactions. According to the most widely employed system, articles to be sold are weighed to meet a preset weight. Any excess or shortage of the measured weight of articles is not preferred for both distributors and consumers. It is preferable to determine a preset package weight and weigh articles such that the measured weight is equal to or substantially the same as the preset package weight within a small error range. To meet such a demand, there has been developed and used a so-called combinatorial weighing apparatus based on the high-speed calculation capacity of a computer and the theory of statistics and probability. The combinatorial weighing apparatus generally includes a number of weighing heads arranged in a circular pattern around frames which constitute a framework of the apparatus. In operation, weight values obtained from the weighing heads are combined, and those weighing heads which give a combination of weight values that is equal or closest to a preset weight are selected. Then, articles carried by the selected weighing heads are discharged and packaged.

Various improved combinatorial weighing apparatus have been proposed for more accurate and faster combinatorial calculations. Since combinatorial weighing is relatively new technology, however, much remains to be improved.

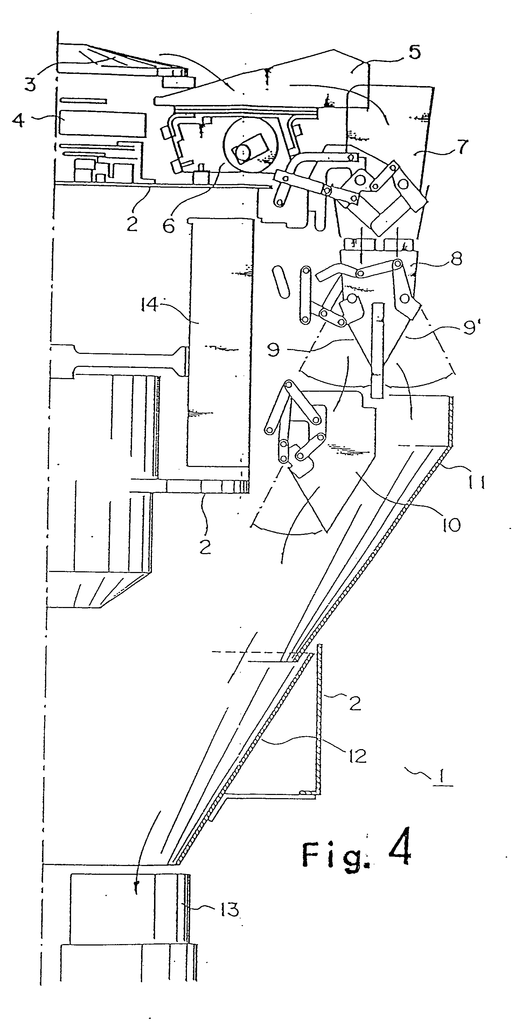

One general combinatorial weighing apparatus of recent design is illustrated in Fig. 4 of the accompanying drawings. The combinatorial weighing apparatus, denoted at 1, includes a dispersing table 3 disposed substantially centrally above a plurality of frames 2 and mounted on an electromagnetic vibrator 4. As many radial troughs 5 as the number of weighing heads are mounted on respective vibrators 6 radially around the peripheral edge of the electromagnetic vibrator 4. The radial troughs 5 have radially outer distal ends extending into respective pool hoppers 7 detachably mounted on the frames 2. The pool hoppers 7 are connected to respective lower weighing hoppers 8 each including inner and outer lids 9, 9' that are openably and closably disposed above memory hoppers 10 and a collection chute 11. The col lection chute 11 is positioned above a lower collection chute 12 which is joined to a packaging device (not shown) through a timing hopper 13.

When articles (not shown) are delivered by a bucket conveyor to a position over the center of the distributing table 3 and placed onto the distributing table 3, the distributing table 3 is vibrated by the electromagnetic vibrator 4 to supply the articles into the radial troughs 5 corresponding to the weighing heads, and the radial troughs 5 are radially vibrated by the electromagnetic vibrators 6 to carry the articles into the pool hoppers 7. The articles from the pool hoppers 7 are then charged into the weighing hoppers 8, which weigh the charged articles by weighing units such as load cells or the like. A microcomputer (not shown) calculates combinations of weight values thus measured, and selects those weighing hoppers 8 which give a combination of weight values that is equal or closest to a preset weight. The lids 9 or 9' of the selected weighing hoppers 8 are opened by a control unit (not shown) through an opening/closing mechanisms 14 to discharge the articles from these weighing hoppers 8 into the memory hoppers 10 or the collection chute 11. The articles are then fed through the collection chute 12 and the timing hopper 13 into the packaging device.

Therefore, the articles are weighed by the weighing hoppers 8. The supplied articles are charged from the hop pers 7 into the weighing hoppers 8. The articles delivered by the bucket conveyor are placed on the distributing table 3. The articles are smoothly displaced onto the distributing table 3 and into the weighing hoppers 3 due to gravity.

It has strongly been desired that the combinatorial weighing apparatus 1 be capable of processing articles at high speed. Various improvements and studies have been made to operate the weighing units or heads at high speed and to effect calculations in the computer at high speed. The articles are gravity-fed in most areas of the combinatorial weighing apparatus. As shown in Fig. 4, the collection chutes 11, 12, which would otherwise be less effective in gravity-feeding the articles, are inclined at a large gradient for quickly transferring the weighed articles into the timing hopper 13.

When the lids of the weighing hoppers 8 and the memory hoppers 10 are quickly opened and closed to feed the articles through the collection chutes 11, 12 in shorter cycles, a batch of articles in one cycle and other batches of articles in preceding and following cycles may be not be clearly divided, and as a result these batches may not be delivered into the packaging device as clearly separated groups. The weighed articles in these consecutive batches may therefore be mixed together, and hence the intended combinatorial operation may not be performed.

Furthermore, the articles which are gravity-fed at high speed through the collection chutes 11, 12 may collide with each other, and be damaged or broken into fine particles. As a consequence, the value of the weighed articles as merchandise may be lowered, or the weight of the discharged articles may be varied.

With a view to solving the above problems, the inventors have developed a combinatorial weighing apparatus in which an intermediate shutter is disposed in the collection chute 11 for temporarily stopping articles to lower the dropping speed of the articles as they are gravity-fed, and the lids 9 or 9' of the weighing hoppers 8 are opened to clearly separating the articles discharged from the weighing hoppers 3 in distinct groups or batches. Such an arrangement is disclosed in U.S. Reissue Patent 32,276, European Patent EP 0052498B1, and Australian Patent Abridgment AU-B-77297/81.

However, the distance from the weighing hoppers or the pool hoppers to the intermediate shutter is such that articles discharged from these hoppers tend to interfere with each other until they reach the intermediate shutter.

Accordingly, it is desirable to provide a collection chute structure for use in combinatorial weighing apparatus having a plurality of weighing hoppers, the collection chute structure being capable of allowing articles discharged from the weighing hoppers and dropped by gravity-feed to be clearly separated in distinct groups without impairing the combinatorial weighing function of the apparatus in any way.

According to an embodiment of the present invention there is provided a collection chute structure for use in a combinatorial weighing apparatus having as many radial troughs disposed around a distributing table over apparatus frames as the number of weighing hoppers, the radial troughs having distal ends connected to respective pool hoppers which are in turn coupled to the respective weighing hoppers that are directed toward a collection chute assembly connected at a lower end to a packaging device through a timing hopper. The collection chute assembly includes a conical upper collection chute comprising unit chutes associated with the respective weighing hoppers and joined laterally together. Openable and closable stoppers are disposed inside of the upper collection chute in association with the respective unit chutes for temporarily retaining articles dropping on and along the unit chutes. The collection chute assembly also includes a conical lower collection chute disposed below the upper collection chute. A stopper or intermediate shutter is disposed inside of the lower collection chute for temporarily retaining articles dropping on and along the lower collection chute.

Articles charged onto the distributing table of the combinatorial weighing apparatus with weighing heads arranged in a circular pattern are distributed and supplied across the peripheral edge of the distributing table into the radial troughs due to three-dimensional vibration thereof. The articles supplied to the radial troughs are then supplied to the pool hoppers from the distal ends of the radial troughs due to radial vibration thereof. The articles are charged at prescribed timing from the pool hoppers into the weighing hoppers disposed therebelow. In the weighing hoppers, the articles are weighed by weight detectors such as load cells. The detected weights are processed by a microcomputer to calculate combinations of the weights, and also to find a combination of weights which is equal to or approximately equal to a preset weight with a minimum excess weight. The lids of those weighing hoppers which give the combination of weights are opened to discharge the articles directly, or indirectly through memory hoppers therebelow, into the upper collection chute. The upper collection chute is inclined at a relatively small gradient such that the articles can drop on and along the upper collection chute in batches corresponding to respective combinatorial weighing processes or cycles. Since the upper collection chute is composed of the separate unit chutes joined together in association with the respective weighing hoppers, the upper collection chute can be assembled, inspected, serviced, or disassembled with ease. The articles dropped by gravity from above the upper collection chute are temporarily retained by the bulk-head-type stop pers associated with the respective unit chutes or weighing hoppers for each combinatorial weighing cycle. The articles dropped downwardly past the stoppers then fall in the lower collection chute, and are temporarily retained by the short cylindrical stopper or intermediate stopper as separate batches in respective combinatorial weighing cycles. The stoppers are effective in lowering the speed at which the articles fall in the upper and lower collection chutes, so that the articles are prevented from being damaged due to mutual collision. The articles are then supplied from the lower collection chute into the timing hopper while the articles are being delivered through the upper and lower collection chutes, the upper collection chute is vibrated by air vibrators or electromagnetic vibrators to prevent the articles from being trapped on or stuck to the collection chute assembly. Therefore, the articles are supplied smoothly from the collection chute assembly into the timing hopper.

Reference will now be made, by way of example, to the accompanying drawings, in which:

Fig. 1 is a fragmentary vertical cross-sectional view of a collection chute structure embodying the present invention;

Fig. 2 is a front elevational view showing the relative positional relationship between a unit chute and a weighing hopper;

Fig. 3 is a side elevational view of a collection chute assembly of a collection chute structure embodying the present invention; and

Fig. 4 is a fragmentary vertical cross-sectional view of a general combinatorial weighing apparatus.

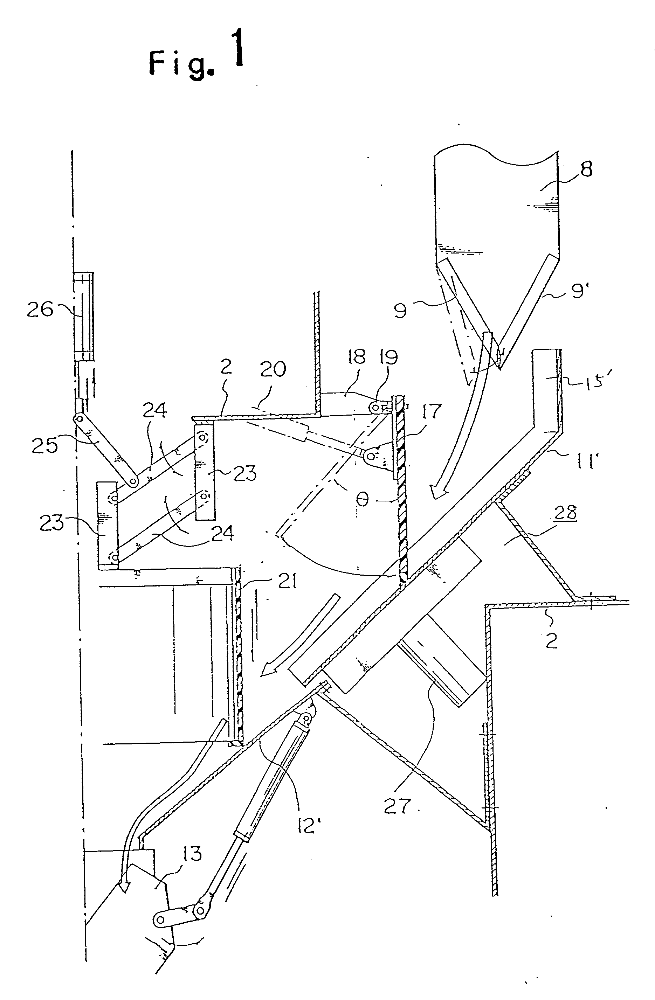

An embodiment of the present invention is shown in Figs. 1 through 3. Those parts which are identical to those shown in Fig. 4 are denoted by identical reference numerals.

A collection chute assembly 28 ing the present invention is of a substantially conical shape having a circular cross section, as with the conventional collection chute shown in Fig. 4. The collection chute assembly 28 comprises an upper collection chute 11' and a lower collection chute 12'.

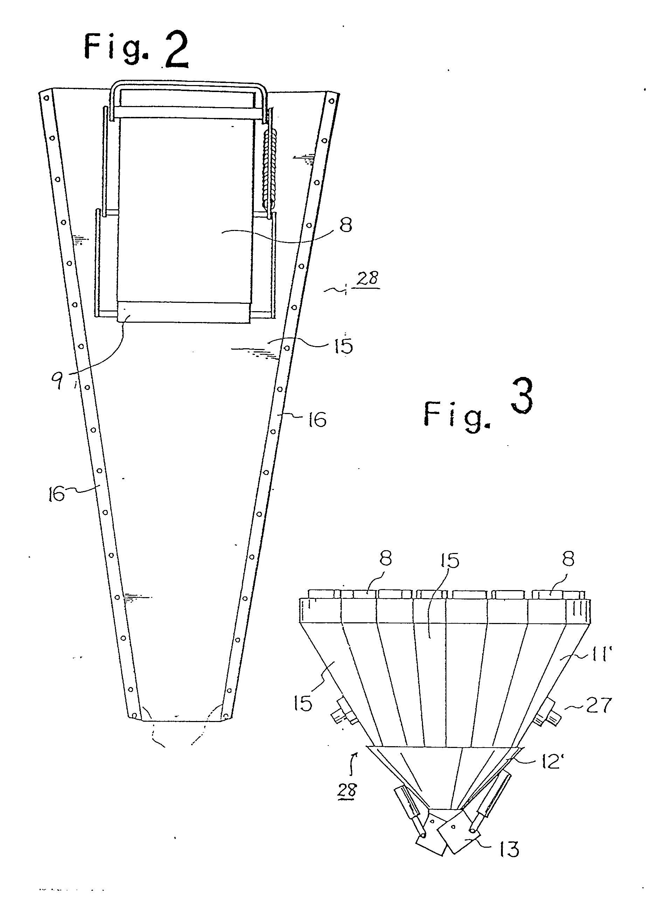

As shown in Figs. 2 and 3, the upper collection chute 11' comprises a plurality of unit chutes 15 each in the shape of an inverted trapezoid which are disposed in vertical alignment with respective weighing hoppers 8. The unit chutes 15 have mating edges 16 on their circumferentially opposite sides, which are joined by screws or the like to arrange the unit chutes 15 in a circular pattern. As shown in Fig. 15, upstanding guide plates 15' are disposed on each unit chutes 15 inwardly of the mating edges 16, the guide plates 15' being elongate vertically along the flat surface of the unit chute 15. The guide plates 15' serve to prevent articles dropped from the weighing heads from interfering with each other.

The lower collection chute 12' is in the form of a single conical panel having a timing hopper 13 on its lower end.

Although not shown in Figs. 1 through 3, pool hoppers, radial troughs, a distributing table, and other components which are associated with the collection chute assembly 28 of the invention are arranged in the same fashion as those shown in Fig. 4 to make up a circular pattern of weighing heads. An opening/closing mechanism, similar to the opening/closing mechanism 14 shown in Fig. 4, is disposed near the center of the frames 2 for opening the lids of the hoppers at prescribed timing.

As illustrated in Fig. 1, a bulk-head-type stopper 17 in the form of a blade of synthetic resin or the like, such as a plastic panel, is disposed inwardly of the upper collection chute 11'', i.e., on the inner surface of each of the unit chutes 15, the stopper 17 being openably and closably mounted on a bracket 18 by a pin 19 for angular movement with respect to the frame 2. The stopper 17 is operatively connected to an air cylinder 20. When the stopper 17 is angularly moved an angle θ by the air cylinder 20, it is opened to allow articles from the weighing hopper 8 to pass directly into the lower collection chute 12'. When the stopper 17 is closed, articles from the weighing hopper 8 are retained on the unit chutes 15 by the stopper 2.

The air cylinders 20 are actuated in the same manner as the opening/closing mechanism by a control unit (not shown) to open and close the respective stoppers 17 with a small time difference from the opening and closing of the lids 9, 9' of the weighing hoppers 8.

A short cylindrical bulk-head-type stopper or intermediate shutter 21 made of "Bancoran" (having hardness of about 70) is disposed downwardly of the stoppers 17 in abutment against the inner surface of the lower collection chute 12' in an annular pattern. The stopper 21 is operatively coupled to an air actuator or cylinder 26 mounted on the frames 2 through brackets 23, parallel links 24, and a link 25. The stopper 21 is vertically movable at the same timing at the stoppers 17 for retaining in an annular pattern those articles which overflow the opposite sides of the blades or the stoppers 17.

As shown in Figs. 1 and 3, the collection chute assembly 28 of the invention is less inclined at a smaller angle to brake articles that would otherwise be dropped quickly by gravity-feed. A pair of air-cylinder vibrators 27 is mounted on the outer surface of the collection chute assembly 28 in diametrically opposite relation or in 180°-spaced relation to impart vibration to the upper collection chute 11' for preventing articles from being caught by or attached to the inner surface of the collection chute assembly 28, and also for preventing articles from being trapped by the opposite sides of the stoppers 17 so that a downward flow of articles will not be blocked upon opening of the stoppers 17.

When articles such as candies are supplied onto a distributing table from above the combinatorial weighing apparatus by a bucket conveyor, the distributing table is vibrated three-dimensionally by an electromagnetic vibrator to distribute and supply the articles across its peripheral edge into the radial troughs of respective weighing heads. The radial troughs are vibrated by their respective electromagnetic vibrators to charge the articles from their distal ends into pool hoppers, from which the articles are fed into the respective weighing hoppers 8 through the lids that are opened by the opening/closing mechanism at prescribed timing. The load cells (not shown) associated with the weighing hoppers 8 then detect the weights of the charged articles. Signals from the load cells, which are indicative of the detected weights, are transmitted to a computer (not shown), which calculates combinations of the weights and find a combination of weights which is equal or closest to a preset target weight with a minimum excess weight. Then, the lids 9' or 9 of those weighing hoppers 8 which give such a weight combination are opened to discharge the articles, which are temporarily stored in memory hoppers, similar to the memory hoppers 10 in Fig. 4. The lids of the memory hoppers are then opened to discharge the articles into the upper collection chute 11'.

In synchronism with the opening and closing of the lids 9, 9' of the weighing hoppers 8, or with a slight time difference from the opening and closing of the lids 9, 9' of the weighing hoppers 8, the air cylinders 20 are operated to close the stoppers 17 to prevent the articles from being rapidly dropped from the weighing hoppers 8 and/or the memory hoppers, i.e., to retain the articles upstream of the stoppers 17. The stoppers 17 are then opened to allow the articles to fall toward the stopper 21, so that the articles can be retained by the stopper 21. Therefore, the articles are prevented from being successively dropped rapidly into the timing hopper 13, and hence are braked by the stoppers 17 and the stopper 21 before reaching the timing hopper 13.

The articles are therefore cushioned or retained twice by the respective stoppers 17, 21, and then supplied into the timing hopper 13. Consequently, the articles are distinctly grouped into a batch in one combinatorial weighing cycle, and the articles from batches in successive weighing cycles are prevented from being mixed with each other, so that the weighed articles discharged after combi natorial weighing processes can be supplied in separate batches to the timing hopper 13 for packaging the articles in the separate batches.

The air vibrators 27 are operated all times to cause the articles on the less inclined collection chute assembly 28 to drop smoothly without staying thereon when the stoppers 17, 21 are opened or without being stuck to the inner surface of the collection chute assembly 28. As a result, the articles are prevented from being dropped rapidly in one stroke or pass, but they are temporarily retained by the stoppers 17, 21 and then start to go to the timing hopper 13 when the stoppers 17, 21 are opened.

The upper collection chute 11' is constructed of the separate units chutes 15 vertically associated with the weighing hoppers 8, respectively. When the combinatorial weighing apparatus is assembled, inspected, or serviced, disassembled, or otherwise handled by the operator, the unit chutes 15 can easily be attached and detached through their mating edges 16. Therefore, the assembling process, the maintenance process, and the disassembling process for the combinatorial weighing apparatus are quite easy to carry out.

The air vibrator 27 and the stoppers 17, 21 can also be assembled and serviced.

The present invention is not limited to the aforesaid embodiment. A Teflon (trademark) coating may be applied to the inner surface of each of the unit chutes of the upper collection chute dependent on the angle of inclination thereof, or a heater or a cooling air nozzle may be attached to each of the unit chutes.

It is also possible to attach a vibro-isolating rubber member to the inner end of each of the stoppers in the collection chute assembly.

With the present invention, as described above, a collection chute structure disposed below the weighing hoppers of the combinatorial weighing apparatus with a number of weighing heads arranged in a circular pattern includes unit chutes associated respectively with the weighing hoppers and having mating edges joined circumferentially. Since the unit chutes are associated with the respective weighing hoppers, the collection chute structure can easily be handled by the operator when the combinatorial weighing apparatus is assembled, inspected, serviced, disassembled, or otherwise handled.

The outer air vibrators and the inner stoppers can also easily be installed on the collection chute assembly, and opened and inspected. Where a number of memory hoppers are installed in the large space within the collection chute assembly, the memory hoppers can also easily be assembled, inspected, and serviced.

Articles are not allowed to drop in one pass along the inner long slanted surface of the collection chute assembly which is relatively less inclined, but are temporarily retained by the blade-like stoppers associated with the respective unit chutes and the short cylindrical stopper disposed downwardly of the blade-like stoppers. Therefore, the articles are grouped in batches in respective combinatorial cycles without being mixed with each other, or mixed into a batch to be packaged next, or being damaged due to collision.

Although a certain preferred embodiment has been shown and described, it should be understood that many changes and modifications may be made therein without departing from the scope of the appended claims.

**Claims**

1. A collection chute structure for use in a combinatorial weighing apparatus, for collecting and guiding articles discharged from a plurality of weighing hoppers and/or memory hoppers, comprising:
an upper collection chute composed of a plurality of units chutes associated respectively with the weighing hoppers and joined laterally;
openable and closable stoppers associated respectively with said unit chutes for temporarily retaining articles discharged from the weighing hoppers and/or the memory hoppers and dropping on and along the unit chutes thereby to brake the articles on the unit chutes;
a lower collection chute disposed downwardly of said upper collection chute; and
an openable and closable intermediate shutter for temporarily retaining articles dropping on and along said lower collection chute thereby to brake the articles on the lower collection chute.

2. A collection chute structure according to claim 1, wherein said stoppers are of the bulk head type.

3. A collection chute structure according to claim 1, further including a vibrator mounted on said upper collection chute for vibrating the upper collection chute.

4. A collection chute structure according to claim 1, further including a timing hopper mounted on a lower end of said lower collection chute for storing articles supplied from the lower collection chute.

5. A collection chute structure according to claim 1, further including guide plates mounted on and along lateral sides of said unit chutes for guiding articles to drop on and along said unit chutes in a predetermined direction.

HL 36751

# Fig. 1

# Fig. 2

# Fig. 3

8

28

15

16

9

16

8 15 8

11'

15

27

12'

28

13

Fig. 4